(19) Europäisches Patentamt
European Patent Office
Office européen des brevets

(11) **EP 3 915 361 A1**

(12) **EUROPEAN PATENT APPLICATION**

(43) Date of publication:
**01.12.2021 Bulletin 2021/48**

(51) Int Cl.:
*A01K 29/00* (2006.01)  *A01K 61/95* (2017.01)

(21) Application number: **20176475.0**

(22) Date of filing: **26.05.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **FURUNO ELECTRIC CO., LTD.**
**Nishinomiya-City**
**Hyogo 662-8580 (JP)**

(72) Inventor: **IKEGAMI, Atsushi**
**Nishinomiya-city, Hyogo 662-8580 (JP)**

(74) Representative: **CSY London**
**10 Fetter Lane**
**London EC4A 1BR (GB)**

(54) **DEVICE FOR CALCULATING FISH BODY DEPTH**

(57) The disclosure relates to a fish body depth calculating device (100) that includes a stereo camera (110, 115), a part detection module (130), a longitudinal vector calculation module (140), a perpendicular line calculation module (150), a projection module (160), and a size calculation module (170). The stereo camera includes a first and a second camera that take a pair of pictures of a fish. The part detection module detects a first and a second body part of the fish on the pair of pictures. The longitudinal vector calculation module calculates in 3D a longitudinal vector from the detected body parts. The perpendicular line calculation module calculates in 3D a perpendicular line that is perpendicular to the longitudinal vector. The projection module projects the perpendicular line on the pair of pictures. The size calculation module calculates a body depth of the fish based on the projected perpendicular line.

FIG. 1

## Description

### TECHNICAL FIELD

The present subject matter described herein, relates to the technical field of calculating fish height. The present subject matter, in particularly, relates to correctly calculating fish body depth, i.e., fish height using stereo camera system.

### BACKGROUND OF THE INVENTION

Background description includes information that may be useful in understanding the present invention. It is not an admission that any of the information provided herein is prior art or relevant to the presently claimed invention, or that any publication specifically or implicitly referenced is prior art.

The aquaculture industry relates to the production of aquatic organisms, including fish, mollusks, crustaceans, and aquatic plants, and the cultivation of freshwater and marine plants and animals under controlled conditions for all or parts of their life cycles. In order to run a successful aquaculture operation, it is required to check the high feeding cost, labor intensified work, imprecise data on number of fish, growth or size of fish.

It is therefore required that owing to development in technology, there must be advancements which enable the measurement of fish size without practically touching the fish.

The purpose of fish measurement will assist in regulating the growth of the fish in cages. The fish measurement in wholesome is carried out by measuring the biomass of the fish. The established technique to calculate biomass is using fish count and fish weight.

Now fish weight being the crucial factor, it depends on accuracy of "fork length" (i.e., fish length) and "body depth". It is an established principle that 5% or less error is required for calculating the fish weight.

$$Weight = \alpha \times (Fork\ Length * Body\ Depth)^b$$

It is apparent that, there should not be more than 2% of error while calculating "fork length" and "body depth". Therefore, the project invention aims to provide a device capable of providing "body depth" with 2% or less error.

In the conventional methods fish length and fish body depth (i.e., fish height) are conventionally measured using a stereo camera system.

A conventional technique consists in:

- drawing a first line on a picture of a fish between mouth and tail of the fish, and

- drawing a second line on the picture, perpendicular to the first line, at a given position on the first line, e.g., at a 50% position from the mouth.

- fish length and fish body depth are calculated from the length of the first and second lines.

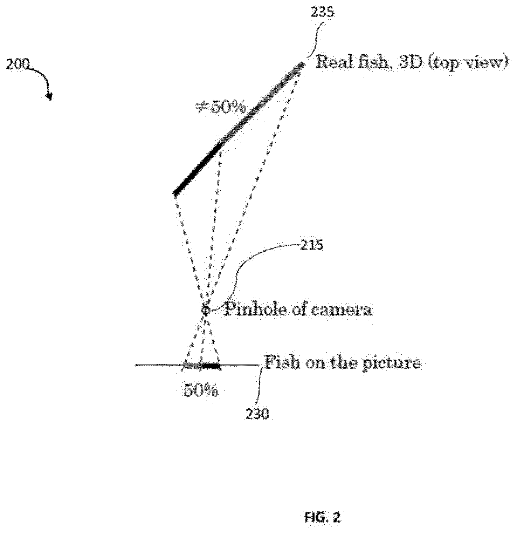

However, there are 2 problems associated with this conventional technique:
Referring to Fig. 2; when the fish is not swimming parallel to the camera, the 50% position on the picture does not correspond to the 50% position in 3Dimensional (3D) space and this does not allow the fish body depth to be calculated at the right position.

In another set of drawback of the conventional methods, for instance, with a fish located relative to the camera such that the tail is located further back than the mouth, and the tail is shallower than the mouth, the line perpendicular to the mouth-tail vector should be displayed on the picture with an acute angle (i.e., not perpendicular). However, in such instance line is perpendicular to the mouth-tail vector, hence leading to incorrect calculation of fish body depth.

Published Patent application WO2017204660A1 provides an arrangement for measuring the biological mass of fish, the arrangement comprising a measurement unit and a processing unit operatively connected to or integrated in the measurement unit. The measurement unit comprises one of an external distance measurement device; the processing unit with a pattern recognition functionality and function for creating an outline of a fish. The outline comprises length and at least one transverse dimension across the length of the fish being measured, or an area inside the outline, all other data are eliminated and the outline is used to calculate or find the biological mass of the fish.

The cited art merely discloses fish height calculation directly from the pictures taken by the stereo cameras and the extensive approach to calculate the body depth is missing from the cited art.

The cited prior art does not disclose construction of an accurate device to calculate fish body depth.

## SUMMARY OF THE INVENTION

Solution to one or more drawbacks of existing invention, and additional advantages are provided in the present disclosure. Additional features and advantages are realized through the technicalities of the present disclosure. Other embodiments and aspects of the disclosure are described in detail herein and are considered to be a part of the claimed disclosure.

The present disclosure relates to a fish body depth calculating device and method that includes a stereo camera, a part detection module, a longitudinal vector calculation module, a perpendicular line calculation module, a projection module, and a size calculation module. The stereo camera includes a first camera and a second camera configured to take a pair of pictures of a fish in an underwater environment. The part detection module is configured to detect a first and a second body part of the fish on the pair of pictures. The longitudinal vector calculation module is configured to calculate in 3D a longitudinal vector representative of a longitudinal direction of the fish from the detected first body part and the detected second body part. The perpendicular line calculation module is configured to calculate in 3D a perpendicular line that is perpendicular to the longitudinal vector. The projection module is configured to project the perpendicular line on the pair of pictures. The size calculation module is configured to calculate a body depth of the fish based on the projected perpendicular line.

In an aspect, the part detection module includes a 3D position calculation module configured to calculate a 3D position of the first body part and the second body part based on a 2D position of the detected first body part and the detected second body part on the pair of pictures.

In an aspect, the perpendicular line calculation module is configured to calculate a line that perpendicularly intersects the longitudinal vector in a vertical plane as the perpendicular line.

Preferably, the perpendicular line calculation module is configured to calculate the perpendicular line that intersects the longitudinal vector at a given length ratio of a length of the longitudinal vector.

In another aspect of the invention, the size calculation module is configured to detect a top end of the fish and a bottom end of the fish from an intersection of the projected perpendicular line with a body of the fish on the pair of pictures.

In yet another aspect of the invention, the part detection module is configured to detect a third body part of the fish on the pair of pictures, different from the first body part and the second body part; and calculate a 3D position of the third body part based on a 2D position of the detected third body part on the pair of pictures. Preferably, the device includes a bending detection module configured to determine whether the fish is bending its body based on a relative position of the 3D position of the third body part and the longitudinal vector. The size calculation module is configured to calculate the body depth of the fish when the bending detection module determines that the fish is not bending.

In one aspect of the present disclosure, the part detection module calculates a 3D position error of at least one of the first body part and the second body part based on a 2D position of at least one of the detected first body part and detected second body part on the pair of pictures. The device includes an error judgment module configured to determine whether the 3D position error is less than a given error threshold. The size calculation module is configured to calculate the body depth of the fish when the error judgment module determines that the 3D position error is less than the given error threshold.

Preferably, the first body part is a mouth of the fish and the second body part is a tail of the fish.

Preferably, when one of the first body part and the second body part is different from a mouth or a tail of the fish, the longitudinal vector calculation module is configured to calculate an intermediate vector between the first and second body parts, adjust the intermediate vector to be in line with a mouth-tail vector between the mouth and the tail, and output the adjusted intermediate vector as the longitudinal vector.

Preferably, the longitudinal vector calculation module is configured to adjust the intermediate vector, knowing a species of the fish.

According to another aspect of the present disclosure relates to a method which includes capturing a pair of pictures of a fish in an underwater environment, detecting a first body part of the fish and a second body part of the fish on the pair of pictures. Further the method includes calculating in 3D a longitudinal vector representative of a longitudinal direction of the fish from the detected first body part and the detected second body part. Furthermore, calculating in 3D a perpendicular line that is perpendicular to the longitudinal vector and thereafter projecting the perpendicular line on the pair of pictures. Therefore, calculating a body depth of the fish based on the projected perpendicular line.

The foregoing summary is illustrative only and is not intended to be in any way limiting. In addition to the illustrative aspects, embodiments, and features described above, further aspects, embodiments, and features will become apparent by reference to the drawings and the following detailed description.

## EFFECT OF THE INVENTION

The present invention provides a device which calculates the fish body depth correctly and overcomes the several problems of the prior art as discussed above.

## BRIEF DESCRIPTION OF THE DRAWINGS

It is to be noted, however, that the appended drawings illustrate only typical embodiments of the present subject matter and are therefore not to be considered for limiting of its scope. The detailed description is described with reference to the accompanying figures. In the figures, a reference number identifies the figure in which the reference number first appears. The same numbers are used throughout the figures to reference like features and components. Some embodiments of system or methods or structure in accordance with embodiments of the present subject matter are now described, by way of example, and with reference to the accompanying figures, in which:

Fig. 1 is a flowchart illustrating the structural features of the invention;

Fig. 2 illustrates a prior art technique wherein when the fish is not swimming parallel to the camera, the fish body depth is not calculated at the right position;

Fig. 3 is a flowchart illustrating one example of a procedure to calculate body depth of a fish according to the present invention;

Fig. 4 is a view illustrating a 3D fish of the present disclosure;

Fig. 5 is a view illustrating one example of a procedure of adjusting intermediate vector in the present invention; and

Fig. 6 is a view illustrating one example of a procedure of identifying the bending fish in the present invention.

The figures depict embodiments of the present subject matter for the purposes of illustration only. A person skilled in the art will easily recognize from the following description that alternative embodiments of the structures and methods illustrated herein may be employed without departing from the principles of the disclosure described herein.

## DETAILED DESCRIPTION OF THE INVENTION

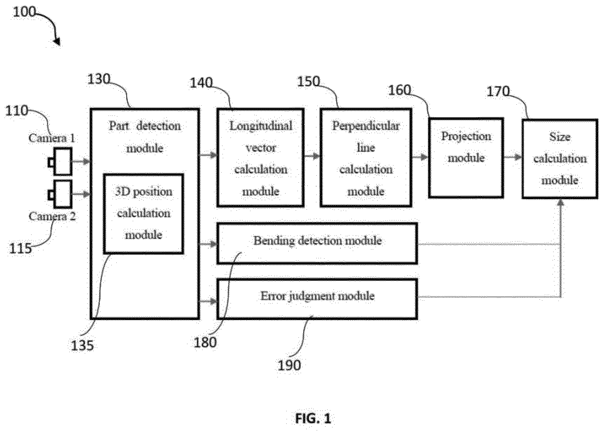

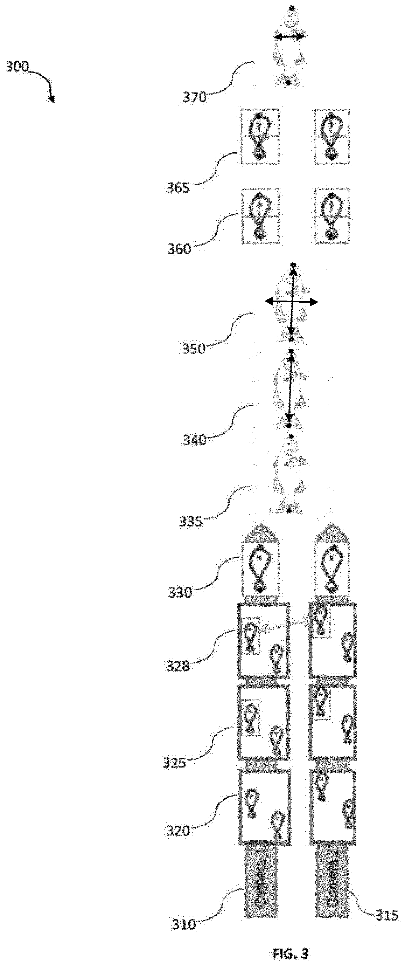

Referring to figures 1 and 3 a device (100) for calculating a fish body depth and a body depth calculation flow (300) are illustrated. In an embodiment, the device (100) includes a stereo camera (110, 115), a part detection module (130), a longitudinal vector calculation module (140), a perpendicular line calculation module (150), a projection module (160), and a size calculation module (170).

The stereo camera comprising a first camera (110,310) and second camera (115,315) is configured to take pair of pictures (320) at the same or almost same timing using synchronization conventionally done by, for example, using General Purpose Input/output (GPIO) Synchronization, bus timestamp synchronization, sound signal synchronization or methods alike. It is apparent that cameras are facing the fish from the side of the fish.

The fish detecting module (325) is configured to perform task of detecting a fish area (i.e., an area containing a fish) on each picture (320). The rectangle box around the fish picture at step 325, is reflective of the same. The rectangular area surrounding a single fish is shown to indicate the presence of a detected fish. In an alternative, instead of a rectangular area, a filled area is also conventionally used to indicate presence of a detected fish. This process is conventionally executed by processor circuitry, and by some cameras.

The pairing module (328) is configured to pair a fish on each pair of pictures. It pairs corresponding fish on the pair of pictures. It is apparent that there are several conventional pairing methods available that can be used, such as, block matching, stereoscopic (Parallax) image, with or without machine learning capabilities.

The fish body part detection module (130, 330) (which may also be referred to as part detection module (130, 330)) is configured to detect two fish body parts on each fish of the paired fish on the paired pictures, and determine a 2D position of each body part on the pair of pictures. The two fish body parts are indicated by a bold dot at step 330. In the present invention, without limiting to the flow, snout (mouth) and tail are used as the two fish body parts, as they are easy to detect distinctive features. However, without limitation, other body parts can be used. There are several conventional point detection methods available that can be used, such as, feature point detection, edge detection, with or without machine learning capabilities.

The 3D position calculation module (135, 335) is configured to convert the 2D position of the two detected fish body parts to a 3D position. There are several conventional conversion methods for 2D to 3D form conversion, and the present invention is configured to use triangulation without adding limitation to the type of form conversion that can be used in the present invention.

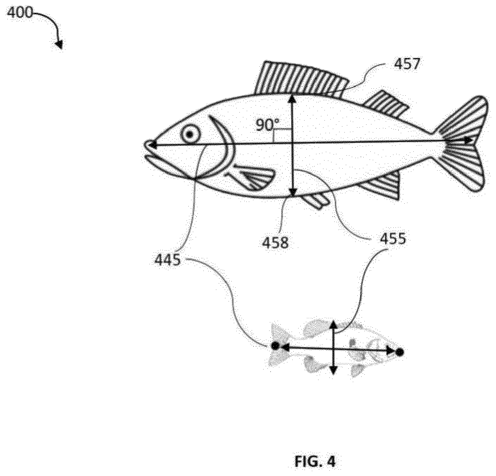

Referring to Fig. 4 with Fig. 3; the 3D spine vector module (140, 340) (which may also be referred to as the longitudinal vector calculation module (140, 340)) is configured to calculate in 3D a longitudinal vector (445) representative of a longitudinal direction of the fish from the detected first body part and the detected second body part. It connects the detected two fish body parts in 3D to form the longitudinal vector (445) (which may also be referred to as a 3D spine vector (445)), i.e., a vector in the longitudinal direction of the fish. Fig.4 is a view that illustrates a fish in 3D and that describes the placement of the longitudinal vector (445) and a perpendicular line (455), perpendicular to the longitudinal vector (445).

The perpendicular line calculation module (150, 350) is configured to calculate in 3D the perpendicular line (455) that is perpendicular to the longitudinal vector (445). The calculated 3D perpendicular line (455) is within a vertical plane. The perpendicular line calculation module (150, 350) calculates the 3D perpendicular line (455) to intersect the longitudinal vector (445) at a given length ratio of a length of the longitudinal vector (445) from for example the mouth. For instance, it can be 50% from mouth. The ratio is subjective to the body parts and the fish species.

The projection module (160, 360) is configured to project the perpendicular line (455) on the pair of pictures (320). It carries out the function of projecting 3D perpendicular on 2D pair of pictures. Further, 2D positions detecting module (365) scans the projected perpendicular line (455), detects top (457) and bottom (458) ends of the fish, and determines a 2D position of the top and bottom ends on the pair of pictures. The detection method is not limited, and for instance may be edge detection, and pattern matching with or without machine learning capabilities.

The size calculation module (170, 370) is configured to calculate the body depth of the fish based on the projected perpendicular line (455). The 2D position of the detected top and bottom ends of the fish is converted to a 3D position by a 3D reconstruction method similar to the methods at step (135, 335). For example, triangulation may be used. The body depth is measured by the 3D distance between the top (457) and bottom (458) ends.

The machine learning may use, for example, a neural network. Particularly, deep learning using a deep neural network where multiple layers of neurons are combined may be suitable. Without limiting to the configuration described above, machine learning other than the neural network, such as a support vector machine, a decision tree, etc. may be used.

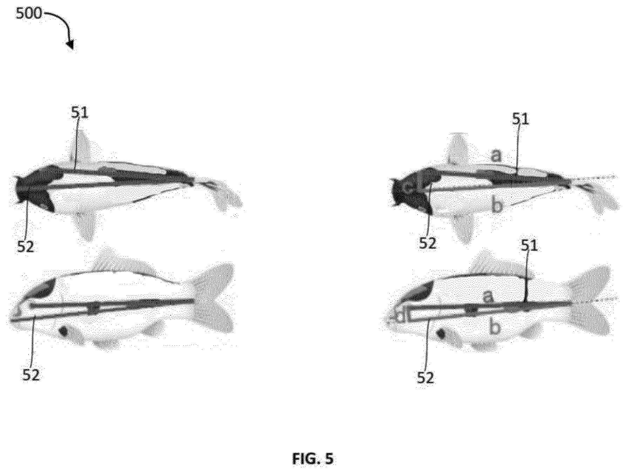

Fig. 5 is a view illustrating one example of a procedure of adjusting an intermediate vector (51) in the present invention. To clear it further, by a way of example, consider that instead of using snout (mouth) and tail (caudal fin) similar to steps (330, 340, 350), referring to Fig. 3; other body parts can be used such as for instance, depending on the fish species, other distinctive features such as the eye, the pectoral fin, the peduncle may be preferred to ease the detection.

Consider that at step (340) (i.e., the longitudinal vector calculation module (340)), the eye and peduncle are connected by an intermediate vector (51) (which may also be referred to as a base vector (51)). The base vector is not aligned with the spine vector/longitudinal vector (52, 445). In order to align the base vector on the spine vector, the length "a" of the base vector in Fig. 5 is calculated by converting a 2D position of the detected eye and the detected peduncle to a 3D position by a 3D reconstruction method and by calculating the 3D distance between the eye and the peduncle.

As the proportionality between lengths a, b, c, d referring to Fig.5 is determined for each fish species, knowing length "a" and the fish species, the base vector (51) can be adjusted so that it aligns to the spine vector (52, 445). Post the alignment of the vector, the perpendicular line calculation module (350) calculates the 3D perpendicular line to intersect the vector at a given ratio of length between the two body parts. For instance, in the current example, it may be 30% from the eye.

In an embodiment of the invention, the device (100) may further include an error judgment module (190). When calculating a 3D position based on triangulation method, the 3D position and the error on the position are conventionally outputted by the triangulation calculation. Such calculation results into output like: Fork length, fork length error, body depth, and body depth error. These two errors are however calculated independently from each other but it is apparent that said two errors cannot be treated equally. The accuracy of the calculated perpendicular line depends hugely on the accuracy of the fork length measurement. The body depth error is calculated assuming that fork length measurement is completely accurate.

Now, when a calculated fork length error is large, and a calculated body depth error is zero, it actually amounts to a large actual body depth error. In the present invention, to overcome such deficiency, the error judgment module (190) may determine whether the 3D position error or the fork length error is small, i.e., smaller than an error threshold. The size calculation module (170) may adopt the calculated body depth only when the error judgment module (190) determines that the 3D position error or the fork length error is small.

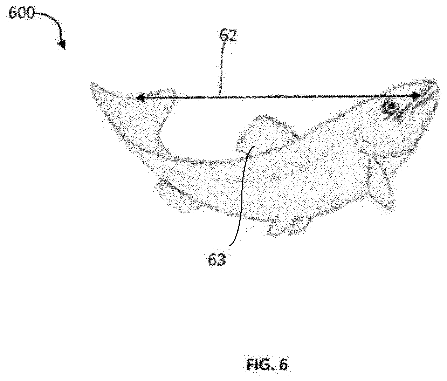

In an embodiment of the invention, the device (100) of the previous embodiments may further include a bending detection module (180). Fig. 6 is a view illustrating one example of a procedure of identifying a bending fish in the present invention. When a fish is bending, a spine vector (62) doesn't match the fish's backbone line and the algorithm of the previous embodiments may not provide a good body depth accuracy.

In the process of detecting fish bending, the fish body part detection module (130, 330) may detect a third body part on the pair of pictures and determine a 2D position of the third body part. As an example, a dorsal fin (63) as shown in Fig. 6 may be used as the third body part. The 3D position calculation module (135, 335) may convert the 2D position of the third body part to a 3D position by using for example triangulation. The bending detection module (180) may determine whether the 3D position of the dorsal fin (63) (i.e., the third body part) is more than a threshold distance from the spine vector (62) (i.e., vector between the first and second body parts) to determine whether the fish is bending. The size calculation module (170) may adopt the calculated body depth only when the bending detection module (180) determines that the fish is not bending.

In the previous embodiments the device (100) comprises a stereo camera comprising a first camera (110, 310) and a second camera (115, 315). This is however not a limitation. The stereo camera may comprise more than two cameras.

**Claims**

1. A device (100), comprising:

   a stereo camera comprising a first camera (110, 310) and a second camera (115, 315) configured to take a pair of pictures (320) of a fish in an underwater environment;
   a part detection module (130, 330) configured to detect a first body part of the fish and a second body part of the fish on the pair of pictures (320);
   a longitudinal vector calculation module (140, 340) configured to calculate in 3D a longitudinal vector (445) representative of a longitudinal direction of the fish from the detected first body part and the detected second body part;
   a perpendicular line calculation module (150, 350) configured to calculate in 3D a perpendicular line (455) that is perpendicular to the longitudinal vector (445);
   a projection module (160, 360) configured to project the perpendicular line (455) on the pair of pictures (320); and
   a size calculation module (170, 370) configured to calculate a body depth of the fish based on the projected perpendicular line (455).

2. The device of claim 1, wherein:
   the part detection module (130, 330) comprises:
   a 3D position calculation module (135, 335) configured to calculate a 3D position of the first body part and the second body part based on a 2D position of the detected first body part and the detected second body part on the pair of pictures.

3. The device of claim 1 or claim 2, wherein:
   the perpendicular line calculation module (150, 350) is configured to calculate a line that perpendicularly intersects the longitudinal vector (445) in a vertical plane as the perpendicular line.

4. The device of claim 3, wherein:
   the perpendicular line calculation module (150, 350) is configured to calculate the perpendicular line (455) that intersects the longitudinal vector (445) at a given length ratio of a length of the longitudinal vector (445).

5. The device of any of the preceding claims, wherein:
   the size calculation module (170, 370) is configured to detect a top end of the fish and a bottom end of the fish from an intersection of the projected perpendicular line with a body of the fish on the pair of pictures.

6. The device of any of the preceding claims, wherein:
   the part detection module (130, 330) is configured to:

   detect a third body part of the fish on the pair of pictures, different from the first body part and the second body part; and
   calculate a 3D position of the third body part based on a 2D position of the detected third body part on the pair of pictures; wherein

   the device further comprises a bending detection module (180) configured to determine whether the fish is bending its body based on a relative position of the 3D position of the third body part and the longitudinal vector; wherein the size calculation module (170, 370) is configured to calculate the body depth of the fish when the bending detection module (180) determines that the fish is not bending.

7. The device of any of the preceding claims, wherein:

the part detection module (130, 330) calculates a 3D position error of at least one of the first body part and the second body part based on a 2D position of at least one of the detected first body part and detected second body part on the pair of pictures; wherein
the device further comprises an error judgment module (190) configured to determine whether the 3D position error is less than a given error threshold; wherein
the size calculation module (170, 370) is configured to calculate the body depth of the fish when the error judgment module (190) determines that the 3D position error is less than the given error threshold.

8. The device of any of the preceding claims, wherein:
the first body part is a mouth of the fish and the second body part is a tail of the fish.

9. The device of any of one of claims 1 to 7, wherein:
when one of the first body part and the second body part is different from a mouth or a tail of the fish, the longitudinal vector calculation module (140, 340) is configured to:

calculate an intermediate vector (51) between the first and second body parts,
adjust the intermediate vector to be in line with a mouth-tail vector between the mouth and the tail, and
output the adjusted intermediate vector (51) as the longitudinal vector (52).

10. The device of claim 9, wherein:
the longitudinal vector calculation module (140, 340) is configured to adjust the intermediate vector (51), knowing a species of the fish.

11. A method comprising:

capturing a pair of pictures (320) of a fish in an underwater environment;
detecting (330) a first body part of the fish and a second body part of the fish on the pair of pictures (320);
calculating (340) in 3D a longitudinal vector (445) representative of a longitudinal direction of the fish from the detected first body part and the detected second body part;
calculating (350) in 3D a perpendicular line (455) that is perpendicular to the longitudinal vector (445);
projecting (360) the perpendicular line (455) on the pair of pictures (320); and
calculating (370) a body depth of the fish based on the projected perpendicular line (455).

FIG. 1

200

235
Real fish, 3D (top view)

≠50%

215
Pinhole of camera

Fish on the picture

50%

230

FIG. 2

FIG. 3

FIG. 4

FIG. 5

FIG. 6

Europäisches
Patentamt

European
Patent Office

Office européen
des brevets

**EUROPEAN SEARCH REPORT**

Application Number

EP 20 17 6475

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GB 2 539 495 A (ACE AQUATEC LTD [GB]) 21 December 2016 (2016-12-21) * the whole document * ----- | 1-11 | INV. A01K29/00 A01K61/95 |
| A | WO 2014/098614 A1 (EBTECH AS [NO]) 26 June 2014 (2014-06-26) * page 9, lines 16-18 * * figures 1-2 * ----- | 1 | |

| | | | |
|---|---|---|---|
| | | | TECHNICAL FIELDS SEARCHED (IPC) |
| | | | A01K |

The present search report has been drawn up for all claims

| Place of search | Date of completion of the search | Examiner |
|---|---|---|
| The Hague | 22 October 2020 | Batres Arnal, Lucía |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 20 17 6475

This annex lists the patent family members relating to the patent documents cited in the above-mentioned European search report.
The members are as contained in the European Patent Office EDP file on
The European Patent Office is in no way liable for these particulars which are merely given for the purpose of information.

22-10-2020

| Patent document cited in search report | | Publication date | Patent family member(s) | | Publication date |
|---|---|---|---|---|---|
| GB 2539495 | A | 21-12-2016 | NONE | | |
| WO 2014098614 | A1 | 26-06-2014 | CA | 2895758 A1 | 26-06-2014 |
| | | | CL | 2015001722 A1 | 20-05-2016 |
| | | | EP | 2936051 A1 | 28-10-2015 |
| | | | NO | 337305 B1 | 07-03-2016 |
| | | | WO | 2014098614 A1 | 26-06-2014 |

EPO FORM P0459

For more details about this annex : see Official Journal of the European Patent Office, No. 12/82

**REFERENCES CITED IN THE DESCRIPTION**

**Patent documents cited in the description**

- WO 2017204660 A1